Europäisches Patentamt

European Patent Office

Office européen des brevets

(19)

(11) Numéro de publication : **0 023 188**
**B1**

(12)

# FASCICULE DE BREVET EUROPÉEN

(45) Date de publication du fascicule du brevet :
**07.05.86**

(21) Numéro de dépôt : **80420091.3**

(22) Date de dépôt : **16.07.80**

(51) Int. Cl.⁴ : **A 61 M  1/34, A 61 M  1/36,
B 01 D 13/00, F 28 D  9/00**

(54) **Dispositif formant enveloppe pour un empilement p. ex. pour hémodialyseurs, appareil comportant ledit dispositif et procédé de montage dudit appareil.**

(30) Priorité : **17.07.79 FR 7918981**

(43) Date de publication de la demande :
**28.01.81 Bulletin 81/04**

(45) Mention de la délivrance du brevet :
**07.05.86 Bulletin 86/19**

(84) Etats contractants désignés :
**BE CH DE GB IT LI NL SE**

(56) Documents cités :
**FR-A- 2 294 731
FR-A- 2 346 033
FR-A- 2 367 518
FR-A- 2 420 976
US-A- 3 547 271**

(73) Titulaire : **HOSPAL INDUSTRIE
7, Avenue Lionel Terray
F-69330 Meyzieu (FR)**

(72) Inventeur : **Benattar, Robert
115, boulevard Yves Farges
F-69007 Lyon (FR)**
Inventeur : **Cronenberger, Michel
Chassagny
F-69700 Givors (FR)**

(74) Mandataire : **Gauckler, Jacques et al
Service Brevets HOSPAL HOSPAL C.O.T. B.P. 21
F-69881 Meyzieu Cedex (FR)**

Jouve, 18, rue St-Denis, 75001 Paris, France

EP 0 023 188 B1

## Description

La présente invention à laquelle ont collaboré Messieurs Robert BENATTAR et Michel CRONEN-BERGER, concerne un dispositif formant enveloppe destiné à maintenir un empilement sous l'action d'un effort de compression. Des dispositifs de ce genre sont connus notamment par le FR-A-2 294 731.

L'empilement peut être tel qu'il fasse partie d'appareils de traitement de sang comme les hémodialyseurs, les hémofiltres ou les oxygénateurs du sang, mais ce peut être aussi un empilement destiné à être utilisé dans des échangeurs de chaleur, des filtres à gaz ou des dispositifs de séparation ou d'échange en général. De tels empilements sont habituellement constitués d'éléments sensiblement plans, appelés ci-après « éléments ». Les éléments peuvent être par exemple des feuilles de membranes semi-perméables ou des plaques relativement minces, ils peuvent également être des feuilles de membranes semi-perméables et leurs plaques-supports.

La présente invention a pour but un dispositif formant enveloppe qui permet de soumettre un empilement tel que décrit ci-avant à un effort de compression, qui a essentiellement pour rôle d'établir des passages d'écoulements réguliers et minces pour le ou les fluides qui circulent au contact des éléments.

Il a maintenant été trouvé un dispositif formant enveloppe pour un empilement d'éléments destiné à maintenir ledit empilement sous l'action d'un effort de compression, ledit dispositif comprenant deux plateaux entre lesquels est disposé ledit empilement les faces intérieures desdits plateaux étant au contact des faces de l'empilement sensiblement parallèles au plan des éléments, et au moins deux plaques latérales placées devant au moins deux faces latérales opposées de l'empilement, chaque plaque latérale étant reliée à chaque plateau au moyen d'une pluralité de tenons et d'évidements coopérant par l'intermédiaire de leurs surfaces d'appui, caractérisé en ce que lesdites surfaces d'appui sont perpendiculaires au plan des faces latérales de l'empilement en ce que les plaques latérales comprennent des rebords recouvrant les zones marginales des bords latéraux des plateaux auxquels lesdits rebords sont fixés.

On appellera, par la suite « face latérale » les faces de l'empilement qui sont sensiblement perpendiculaires aux plans des éléments. Les « faces latérales opposées » étant les faces latérales homologues de l'empilement, comme par exemple les deux faces latérales longitudinales d'un empilement parallélipipédique, rectangle ou pour un empilement parallélipipédique de base trapézoïdale, c'est-à-dire constitué d'éléments trapézoïdaux, les « faces latérales opposées » peuvent être les faces latérales selon les bases desdits trapèzes ou les faces latérales selon les deux autres côtés desdits trapèzes.

On appellera, par la suite « bords latéraux des plateaux », les bords des plateaux qui correspondent aux faces latérales de l'empilement et « bords latéraux opposés des plateaux », les bords latéraux des plateaux qui correspondent à des faces latérales opposées de l'empilement.

Les bords des plaques latérales correspondant à des bords latéraux des plateaux désigneront les bords des plaques latérales sensiblement parallèles au plan des éléments.

Les plateaux et les plaques latérales peuvent être constitués de matériaux différents ou non, homogènes ou non, en particulier ils peuvent être armés, par exemple par une ossature métallique. Ils peuvent comprendre des éléments métalliques (par exemple en alliage d'aluminium ou acier) ou en matières thermoplastiques, telles que les polyoléfines, les polyamides, les résines acryliques, le polystyrène, leurs mélanges ou copolymères qui possèdent notamment de bonnes caractéristiques mécaniques, en particulier à la flexion et à la traction. On peut aussi employer des matières thermoplastiques additionnées de charges renforçantes (notamment l'amiante, le carbone et de préférence les fibres de verre).

Le dispositif selon l'invention formant enveloppe pour un empilement d'éléments est destiné à maintenir un empilement par exemple constitué de membranes semi-perméables et de plaques-supports, sous un effort de compression tel que l'effort de compression entre les divers éléments constituants l'empilement soit suffisant, d'une part pour assurer l'étanchéité entre deux éléments adjacents à leur périphérie, et que d'autre part les passages d'écoulement pour le ou les fluides qui circulent au contact des éléments, par exemple au contact des membranes soient à la fois réguliers et minces. Le dispositif comprend :

— deux plateaux entre lesquels est disposé l'empilement, les faces intérieures des plateaux, c'est-à-dire les faces des plateaux destinées à être situées à l'intérieur de l'appareil, étant au contact des faces de l'empilement sensiblement parallèles au plan des éléments,

— au moins deux plaques latérales placées devant au moins deux faces latérales de l'empilement,

— au moins une plaque latérale reliée à au moins un plateau au moyen d'au moins un tenon et un évidement coopérant par l'intermédiaire de leurs surfaces d'appui,

— au moins une plaque latérale peut être solidaire d'au moins un plateau, de préférence chaque plaque latérale est reliée aux deux plateaux au moyen d'une pluralité de tenons et d'évidements coopérant par l'intermédiaire de leurs surfaces d'appui.

Les évidements peuvent être situés le long des bords latéraux des plateaux et coopérer avec les tenons situés le long des bords correspondants des plaques latérales. Ou bien les tenons peuvent être situés le long des bords latéraux des plateaux et coopérer avec les évidements situés le long des bords correspondants des plaques latérales.

Il est bien entendu que les plateaux peuvent porter des tenons et/ou des évidements qui peuvent être réalisés sur une excroissance ou une pluralité d'excroissances situées le long des bords latéraux des plateaux par exemple sur la face extérieure des plateaux ou sur la face des plateaux sensiblement perpendiculaire au plan des éléments, ou encore que les évidements peuvent être des creux débouchant à la fois sur la face extérieure des plateaux et sur la face des plateaux sensiblement perpendiculaire au plan des éléments ou peuvent être des cavités débouchant seulement sur cette dernière face.

Il est bien entendu également que la plaque latérale peut porter des tenons et/ou des évidements qui peuvent être réalisés sur une excroissance ou sur une pluralité d'excroissances situées le long des bords latéraux des plaques latérales sur leurs faces intérieures (c'est-à-dire sur la face des plaques latérales destinée à être située à l'intérieur de l'appareil), ou encore que les évidements peuvent être des trous ou des cavités situés dans l'épaisseur des plaques latérales (l'épaisseur étant comptée parallèlement au plan des éléments et perpendiculairement au bord des plaques latérales) et débouchant sur les faces intérieures des plaques latérales.

Par la suite, par simplification, on se référera seulement aux « cavités » et « tenons » et aux « bords latéraux des plateaux » et « bords des plaques latérales ».

Le terme « surface d'appui » désigne la surface du tenon et la surface de l'évidement qui participent au contact entre le tenon et l'évidement. Bien entendu le contact entre la surface d'appui du tenon et la surface d'appui de l'évidement correspondant peut se faire par exemple selon au moins une ligne de contact et/ou au moins une surface.

L'allure générale des surfaces d'appui des tenons et des évidements n'est pas critique mais elles doivent être choisies de telle façon que les surfaces d'appui des tenons puissent coopérer avec les surfaces d'appui des évidements, c'est-à-dire que les surfaces d'appui des tenons puissent être en contact avec les surfaces d'appui des évidements et que les positions relatives des tenons et des évidements soient des positions stables. Ainsi les surfaces d'appui peuvent être formées par les faces d'un dièdre, par trois faces d'un parallélipipède. De préférence les surfaces d'appui sont constituées par des surfaces cylindriques. Il est bien entendu qu'il n'est pas nécessaire que les surfaces d'appui des tenons et des évidements aient la même allure générale, par exemple des tenons dont les surfaces d'appui sont formées par les faces d'un dièdre peuvent coopérer avec des évidements dont les surfaces d'appui sont des surfaces cylindriques.

De préférence les surfaces d'appui des évidements sont des surfaces cylindriques concaves.

De préférence les surfaces d'appui des tenons sont des surfaces cylindriques convexes qui s'appuient contre les surfaces d'appui des évidements en étant tangentes intérieurement selon au moins une droite de contact.

De préférence encore les surfaces d'appui des tenons et des évidements sont des surfaces cylindriques dont les directrices sont des arcs de cercle les cordes soutenant lesdits arcs de cercle et les génératrices desdites surfaces cylindriques sont parallèles au plan des éléments, le rayon des directrices des tenons étant plus petit que le rayon des directrices des évidements. En outre, de préférence les surfaces d'appui des tenons et des évidements coopérant sont perpendiculaires au plan de la face latérale de l'empilement devant laquelle est située la plaque latérale portant les tenons ou les évidements.

Ainsi, pour des tenons et/ou des évidements dont les surfaces d'appui sont des surfaces cylindriques, les génératrices desdites surfaces cylindriques sont de préférence perpendiculaires au plan de la face latérale de l'empilement devant laquelle est située la plaque latérale portant les tenons ou les évidements.

Comme généralement la face intérieure de la plaque latérale est sensiblement parallèle au plan de la face latérale devant laquelle elle est située, on peut dire que les surfaces d'appui sont perpendiculaires au plan de la plaque latérale.

Les surfaces d'appui des tenons et/ou des évidements sont généralement d'aspect sensiblement lisse mais elles peuvent aussi comporter des aspérités par exemple elles peuvent être moletées, striées, granitées ou grenues.

Les bords des plaques latérales correspondant aux bords latéraux des plateaux comportent avantageusement des rebords recouvrant les zones marginales desdits plateaux, c'est-à-dire recouvrant une bande de la surface extérieure du plateau située le long des bords latéraux du plateau.

De préférence ces rebords sont fixés aux bords latéraux des plateaux par exemple par collage ou par soudage. Avantageusement les rebords sont fixés par soudage par ultrasons, les zones marginales des bords latéraux des plateaux et/ou la face intérieure des rebords comportent des bossages facilitant le soudage par ultrasons.

Un seul ou les deux plateaux du dispositif selon l'invention peuvent comporter des moyens d'entrée et/ou de sortie pour le ou les fluides circulant au contact des éléments si l'entrée et/ou la sortie dudit ou desdits fluides se fait sensiblement perpendiculairement au plan des éléments.

L'entrée et/ou la sortie pour le ou les fluides circulant au contact des éléments peut aussi se faire sensiblement parallèlement au plan des éléments, des moyens d'entrée et/ou de sortie pour au moins un fluide, sont alors situés sur au moins une face latérale de l'empilement. Un tel empilement est avantageusement maintenu sous l'action d'un effort de compression à l'aide d'un dispositif selon l'invention dont au moins une plaque latérale comporte des moyens d'entrée et/ou de sortie d'au moins un fluide. Cette plaque latérale qui comporte les moyens d'entrée et/ou

de sortie d'au moins un fluide est placée devant la face latérale de l'empilement, pourvue des moyens d'entrée et/ou de sortie d'au moins un fluide.

Avantageusement, sur la face intérieure d'une plaque latérale, chaque moyen d'entrée et/ou de sortie de fluide est entourée par au moins un logement.

Dans chaque logement on peut placer un garnissage d'étanchéité par exemple par injection d'un produit approprié après que l'empilement ait été placé dans le dispositif selon l'invention. De préférence dans chaque logement est placé un joint, qui peut être obtenu par surmoulage ou être rapporté.

De préférence encore le ou lesdits joints sont en matériau élastique et sont maintenus pressés contre les faces latérales de l'empilement au moyen des plaques latérales.

Avantageusement, comme matériau élastique pour réaliser les joints, on peut utiliser du polychlorure de vinyle plastifié, ou encore des élastomères polyuréthannes ou silicones.

Les moyens d'entrée et/ou de sortie de fluide peuvent être entourés sur la face intérieure de la plaque latérale par un seul logement dans lequel est placé un joint qui avantageusement comporte une rainure ouverte vers la face latérale de l'empilement. De préférence dans cette rainure est placé un garnissage d'étanchéité. Ce garnissage d'étanchéité est mis en place par injection dans la rainure d'un produit approprié, après que l'empilement ait été placé dans le dispositif selon l'invention.

Les moyens d'entrée et/ou de sortie de fluide peuvent aussi par exemple, être entourés de deux logements et dans chaque logement est placé un joint. Les deux joints délimitent entre eux une rainure sur la face intérieure de la plaque latérale, de préférence dans cette rainure est placé un garnissage d'étanchéité, qui peut, comme ci-avant être mis en place par injection d'un produit approprié.

Comme produit approprié pour réaliser le garnissage d'étanchéité, on peut avantageusement utiliser des produits tels que les colles polyuréthannes, époxy ou encore silicones.

De préférence au moins deux plaques latérales du dispositif selon l'invention sont placées devant au moins deux faces latérales opposées de l'empilement. Il est bien entendu que le dispositif selon l'invention peut être tel que plusieurs plaques latérales peuvent être placées devant une seule face latérale de l'empilement et que une ou plusieurs plaques latérales peuvent être placées devant chaque face latérale de l'empilement.

Il a également été trouvé un appareil dont l'empilement d'éléments est maintenu sous un effort de compression par un dispositif tel que décrit ci-avant.

Cet appareil peut comprendre un empilement qui comporte sur ses faces latérales des moyens d'entrée et/ou de sortie d'au moins un fluide. Avantageusement les plaques latérales du dispositif comportent des moyens d'entrée et/ou de sortie d'au moins un fluide. Dans un tel appareil les moyens d'entrée et/ou de sortie d'au moins un fluide situés sur les faces latérales de l'empilement sont entourés par le ou les joints situés sur la face intérieure des plaques latérales autour des moyens d'entrée et/ou de sortie de fluide prévus sur les plaques latérales, lesdits joints étant maintenus pressés contre les faces latérales de l'empilement au moyen des plaques latérales.

Si les plaques latérales ne comportent pas de joints dans les logements, le matériau de garnissage placé dans les logements vient au contact de la face latérale de l'empilement et entoure les moyens d'entrée et/ou de sortie situés sur la face latérale de l'empilement.

L'appareil selon l'invention peut comporter un empilement constitué de feuilles de membranes semi-perméables et de plaques-supports.

Un appareil selon l'invention comportant un dispositif, objet de l'invention, peut être monté en effectuant les opérations ci-après :

— on confectionne un empilement d'éléments, par exemple de membranes semi-perméables et de plaques-supports,

— on place l'empilement ainsi obtenu entre les deux plateaux du dispositif, les faces de l'empilement parallèles au plan des éléments étant au contact des faces intérieures desdits plateaux,

— on place alors l'ensemble constitué par l'empilement et les deux plateaux entre les platines d'une presse,

— on applique sur l'ensemble, au moyen de la presse, l'effort de compression entre les divers éléments constituant l'empilement soit suffisant d'une part pour assurer l'étanchéité entre deux éléments adjacents à leur périphérie et que, d'autre par les passages d'écoulement pour le ou les fluides qui circulent au contact des éléments soient à la fois réguliers et minces,

— on relie chaque plaque latérale aux deux plateaux en plaçant les plaques latérales devant les faces latérales de l'empilement et en engageant les tenons dans les évidements correspondants,

— on relâche l'action de la presse.

On peut, avant de placer les plaques latérales, enduire de colle les surfaces d'appui des tenons et/ou des évidements.

Si l'appareil comporte un dispositif dont les plaques latérales sont pourvues de rebords, on fixe les rebords aux zones marginales des bords latéraux des plateaux par exemple par collage. De préférence on soude par ultrasons les rebords des plaques latérales aux zones marginales des bords latéraux des plateaux.

Si l'appareil comporte un dispositif dont les plaques latérales comportent des moyens d'entrée et/ou de sortie d'au moins un fluide, on peut en outre, généralement après qu'ait cessé l'action de la presse, injecter dans le logement des plaques latérales, un produit d'étanchéité.

Si le dispositif comporte un ou des joints dans le ou les logements des plaques latérales, le procédé de montage de l'appareil est analogue au procédé décrit ci-avant ; cependant, avant de placer les plaques latérales on place le ou les joints dans le ou les logements prévus à cet effet. Avantageusement après que l'action de la presse ait cessé, on injecte un produit d'étanchéité approprié dans la rainure qui est soit prévue dans le joint, soit délimitée entre deux joints.

La compréhension de l'invention sera facilitée par la description des figures ci-jointes qui illustrent à titre d'exemple, schématiquement et sans échelle déterminée un mode de réalisation d'un appareil selon l'invention comportant un dispositif, objet de la présente invention, les plaques latérales du dispositif comportant des moyens d'entrée et de sortie pour deux fluides circulant au contact des éléments.

la figure 1 est une vue de dessus d'un mode de réalisation de l'appareil selon l'invention.

la figure 2 est une vue de côté de l'appareil selon la figure 1.

la figure 3 est une vue en coupe par le plan III-III de l'appareil selon la figure 1, le plan III-III contenant la droite de contact entre les deux surfaces d'appui.

la figure 4 est une vue en coupe par le plan IV-IV de l'appareil selon la figure 1.

la figure 5 est une vue de la face intérieure d'une plaque latérale.

la figure 6 est une vue de la face extérieure d'un plateau.

la figure 7 est une vue de côté selon le bord latéral du plateau représenté figure 6.

les figures 8 et 9 sont des vues de détail en coupe, par un plan passant par la droite de contact des deux surfaces d'appui, ledit plan étant perpendiculaire au plan des éléments, d'un tenon coopérant avec un évidement. Sur la figure 8 le rebord de la plaque latérale n'est pas encore soudé à la zone marginale du bord latéral du plateau, la figure 9 représente le même détail après soudure.

la figure 10 est une vue de détail d'un tenon et d'un évidement qui coopèrent, en coupe par un plan perpendiculaire à la fois au plan des éléments et à la droite de contact entre les surfaces d'appui du tenon et de l'évidement.

la figure 11 est une vue de détail en coupe par un plan perpendiculaire à une face latérale de l'empilement, montrant un logement dans lequel est placé un joint dont la rainure est pourvue d'un garnissage d'étanchéité.

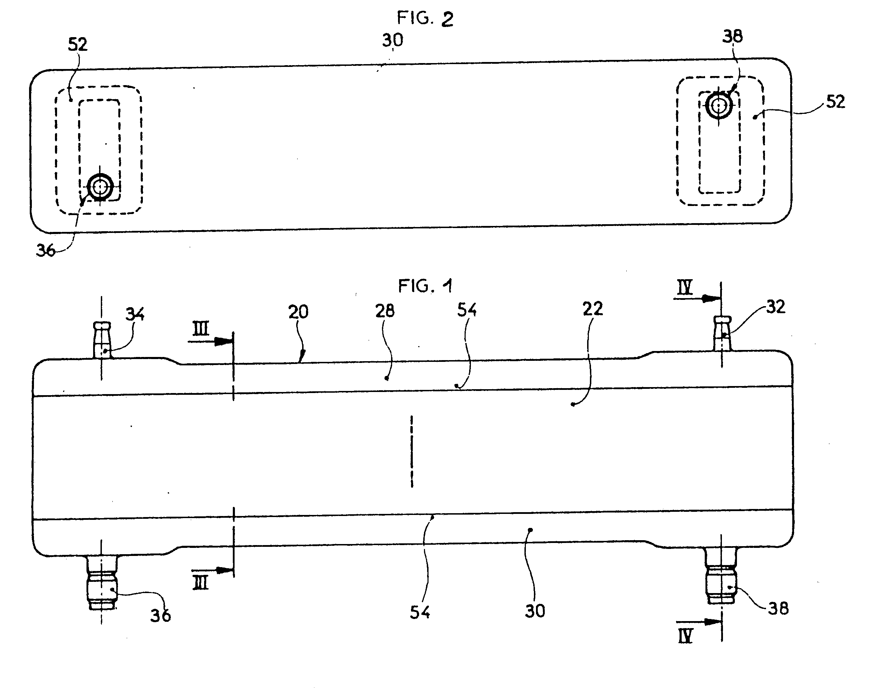

Le dispositif formant enveloppe (20) représenté figures 1, 2, 3 et 4 comporte deux plateaux (22) et (24) et deux plaques latérales (28) et (30). Le dispositif maintient l'empilement (26) sous l'action d'un effort de compression. Les plaques latérales (28) et (30) sont placées devant les faces latérales opposées (27) et (29) de l'empilement (26).

Le dispositif formant enveloppe (20) décrit à titre d'exemple, est destiné plus particulièrement à être utilisé pour un appareil d'échange entre deux fluides circulant respectivement de part et d'autre d'une membrane.

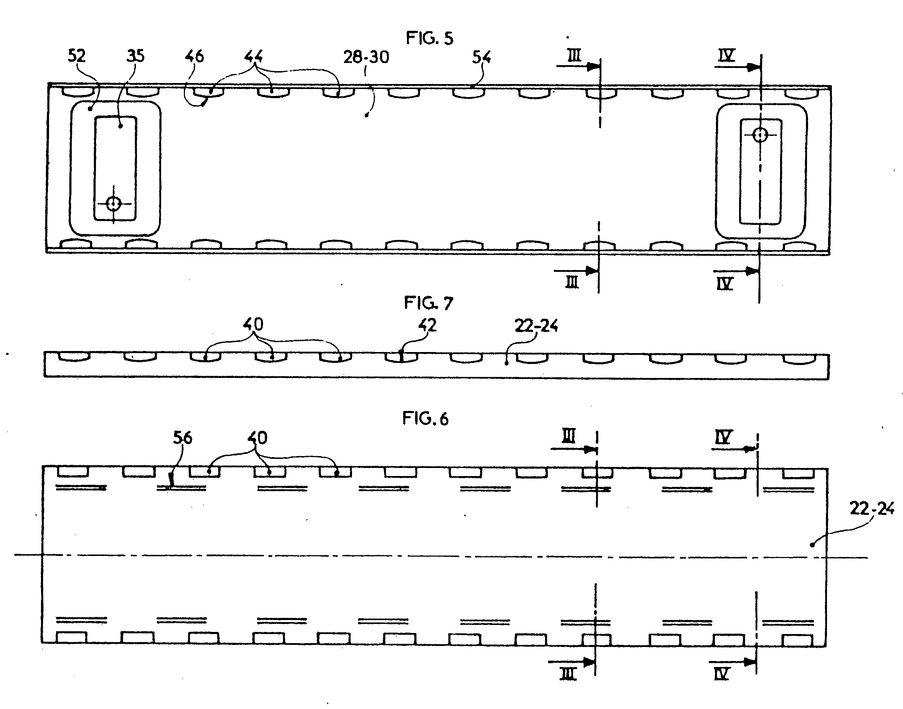

La plaque latérale (28) porte des moyens d'entrée (32) et des moyens de sortie (34) d'un premier fluide destinés à être reliés à des conduits d'alimentation et d'évacuation de ce premier fluide. La plaque latérale (30) porte des moyens d'entrée (36) et des moyens de sortie (38) d'un deuxième fluide destinés à être reliés à des conduits d'alimentation et d'évacuation de ce deuxième fluide. Le plus souvent, comme représenté, les moyens d'entrée et/ou de sortie de fluide sont constitués sur la plaque latérale d'un orifice (31) auquel sont associées vers l'extérieur de l'appareil, une tubulure (33) et, sur la face intérieure de la plaque latérale, une chambre de répartition (35). Egalement, sur la face intérieure de la plaque latérale (28, 30), représentée figure 5, on peut voir que les moyens d'entrée et/ou de sortie de fluide sont entourés par un logement (52).

Les plateaux (22) et (24) représentés, figures 6 et 7, comportent le long de leurs bords latéraux opposés des évidements (40) régulièrement répartis. Ces évidements (40) ont des surfaces d'appui (42) qui sont des surfaces cylindriques concaves dont les directrices sont des arcs de cercle et dont les génératrices sont perpendiculaires au plan de la plaque latérale et de la face latérale devant laquelle la plaque latérale est située.

Les deux plaques latérales (28) et (30) comportent le long de leurs bords des tenons (44) régulièrement répartis (figure 5). Les tenons (44) ont des surfaces d'appui (46) qui sont des surfaces cylindriques convexes dont les directrices sont des arcs de cercle et dont les génératrices sont perpendiculaires au plan de la plaque latérale et de la face latérale devant laquelle la plaque latérale est située.

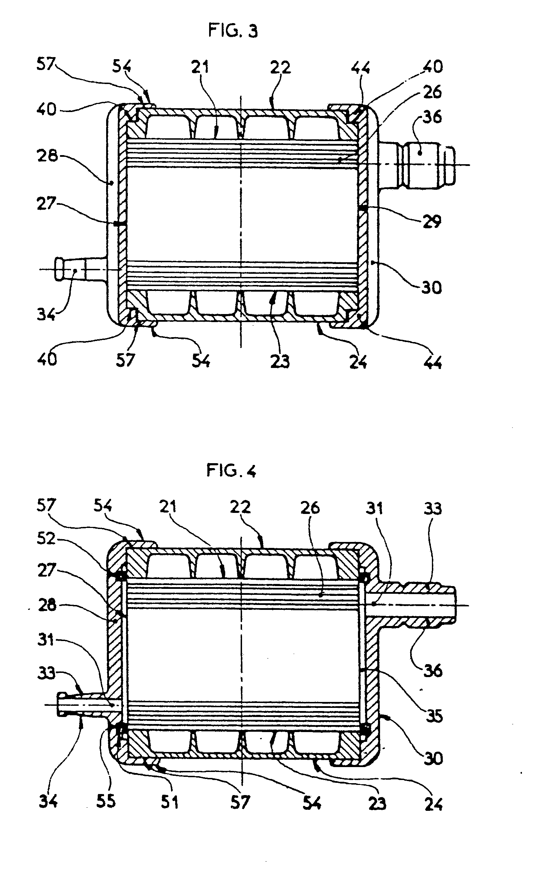

La figure 3 montre bien comment chaque plaque latérale (28, 30) est reliée aux deux plateaux (22, 24) au moyen des tenons (44) coopérant avec les évidements (40).

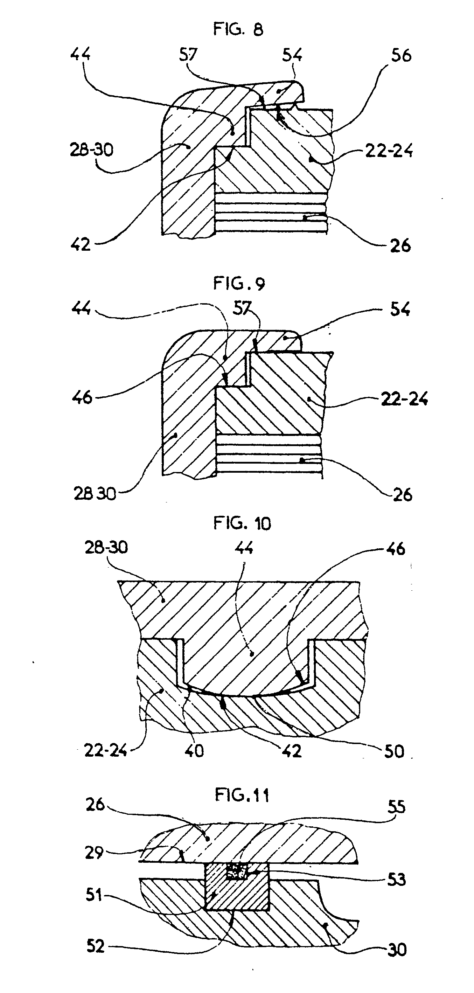

Sur la figure 10 on peut voir comment un tenon (44) et un évidement (40) coopèrent par l'intermédiaire de leurs surfaces d'appui (42) et (46). La surface d'appui (46) du tenon (44) est tangente intérieurement à la surface d'appui (42) de l'évidement (40), selon une droite de contact dont seule la trace (50) est visible dans le plan de coupe, le rayon de la directrice de la surface d'appui du tenon étant inférieur au rayon de la directrice de la surface d'appui de l'évidement.

La figure 4 est une vue en coupe de l'appareil selon la figure 1 par un plan IV-IV perpendiculaire aux faces latérales opposées de l'empilement et situé entre deux ensembles tenon/évidement. Elle montre bien les moyens d'entrée et/ou de sortie de fluides constitués d'un orifice (31) auquel sont associés vers l'extérieur de l'appareil une tubulure (33) et sur la face intérieure de la plaque latérale, une chambre de répartition (35).

Les moyens d'entrée et/ou de sortie de fluide sont entourés sur la face intérieure de la plaque latérale, par un logement (52) dans lequel est placé un joint (51) qui comporte une rainure (53) ouverte vers la face latérale (29) de l'empilement (26). Dans cette rainure est placé le garnissage d'étanchéité (55).

Les bords des plaques latérales (28, 30) correspondant aux bords latéraux des plateaux (22, 24) comportent des rebords (54) qui recouvrent les zones marginales (57) des bords latéraux des plateaux. Les zones marginales (57) sont munies de bossages (56) qui facilitent la fixation des rebords aux bords latéraux des plateaux par soudage par ultrasons.

L'appareil selon la présente invention comportant le dispositif formant enveloppe, également objet de l'invention et dont un mode de réalisation a été décrit à titre d'exemple ci-avant, peut être fabriqué en mettant en œuvre le procédé de montage décrit ci-après en se référant aux figures 3 et 4.

On confectionne l'empilement (26) d'éléments, par exemple de membranes semi-perméables et de plaques-supports.

On place l'empilement (26) ainsi obtenu entre les deux plateaux (22, 24), les faces de l'empilement parallèles au plan des éléments étant au contact des faces intérieures (21, 23) desdits plateaux (22, 24).

On place l'ensemble, constitué par l'empilement (26) et les deux plateaux (22, 24) entre les platines d'une presse (non représentées), et on applique sur l'ensemble au moyen de la presse l'effort de compression déterminé pour que l'effort de compression entre les divers éléments constituant l'empilement soit suffisant d'une part pour assurer l'étanchéité entre deux éléments adjacents à leur périphérie et que, d'autre part, les passages d'écoulement pour le ou les fluides qui circulent au contact des éléments soient à la fois réguliers et minces.

Après avoir éventuellement mis en place les joints (51) dans des évidements (52) prévus sur les faces intérieures des plaques latérales (28, 30), on relie chaque plaque latérale (28, 30) aux deux plateaux (22, 24) en plaçant les plaques latérales devant les faces latérales (27, 29) de l'empilement (26) et en engageant les tenons (44) dans les évidements (40).

On relâche alors l'action de la presse.

On fixe les rebords (54) des plaques latérales (28, 30) aux zones marginales (57) des bords latéraux des plateaux (22, 24) par soudage par ultrasons.

On injecte à l'aide d'une seringue, par un trou prévu à cet effet dans les plaques latérales, soit directement dans les logements, soit après avoir traversé le joint (51) dans la rainure (54) dudit joint, le produit approprié pour former le garnissage d'étanchéité (55).

Le dispositif formant enveloppe, objet de l'invention, permet d'assurer un serrage de l'empilement tel que toute modification ultérieure du serrage initial de l'empilement d'éléments soit interdite. Ce serrage doit être suffisant et invariable pour que l'étanchéité de l'appareil soit obtenue dès le montage et se conserve longtemps, et pour que l'épaisseur des passages réservés aux fluides au contact des éléments soit et reste convenablement calibrée.

L'appareil selon l'invention est simple et économique à réaliser et il se prête à une fabrication en série.

Le serrage des empilements étant inréglable, les appareils livrés sont de qualité constante.

De plus, comme l'appareil et notamment le dispositif formant enveloppe peuvent être construits sans aucune pièce métallique, ils sont facilement destructibles après usage, en particulier par incinération.

Les avantages liés au dispositif formant enveloppe, objet de l'invention, le rendent particulièrement intéressant pour la construction d'appareils utilisables dans le domaine médical, en particulier pour la construction d'appareils d'échanges mettant en œuvre des membranes semi-perméables.

**Revendications**

1. Dispositif formant enveloppe pour un empilement d'éléments destiné à maintenir ledit empilement sous l'action d'un effort de compression, ledit dispositif (20) comprenant deux plateaux (22, 24) entre lesquels est disposé ledit empilement (26), les faces intérieures desdits plateaux (22, 24) étant au contact des faces de l'empilement sensiblement parallèles au plan des éléments, et au moins deux plaques latérales (28, 30) placées devant au moins deux faces latérales (27, 29) opposées de l'empilement, chaque plaque latérale (28, 30) étant reliée à chaque plateau (22, 24) au moyen d'une pluralité de tenons (44) et d'évidements (40) coopérant par l'intermédiaire de leurs surfaces d'appui (42, 46), caractérisé en ce que lesdites surfaces d'appui (42, 46) sont perpendiculaires au plan des faces latérales (27, 29) de l'empilement (26) et en ce que les plaques latérales (28, 30) comprennent des rebords (54) recouvrant les zones marginales (57) des bords latéraux des plateaux (22, 24) auxquels lesdits rebords (54) sont fixés.

2. Dispositif selon la revendication 1, caractérisé en ce que les évidements (40) sont situés le long des bords latéraux des plateaux (22, 24) et en ce que les tenons (44) sont situés le long des bords correspondants des plaques latérales (28, 30).

3. Dispositif selon la revendication 1, caractérisé en ce que les tenons (44) sont situés le long des bords latéraux des plateaux (22, 24) et en ce que les évidements (40) sont situés le long des bords correspondants des plaques latérales (28, 30).

4. Dispositif selon l'une quelconque des revendications précédentes, caractérisé en ce que les surfaces d'appui (42) des évidements (40) sont des surfaces cylindriques concaves.

5. Dispositif selon l'une quelconque des revendications précédentes, caractérisé en ce que les surfaces d'appui (46) des tenons (44) sont des surfaces cylindriques convexes, telles que les surfaces d'appui des tenons s'appuient contre les surfaces d'appui des évidements.

6. Dispositif selon l'une quelconque des revendications précédentes, caractérisé en ce que les surfaces d'appui (46, 42) des tenons (44) et des évidements (40) sont des surfaces cylindriques dont les directrices sont des arcs de cercle, les cordes soutenant lesdits arcs de cercle et les génératrices desdites surfaces cylindriques étant parallèles au plan des éléments, le rayon des directrices des tenons (44) étant plus petit que le rayon des directrices des évidements (40).

7. Dispositif selon la revendication 1, caractérisé en ce que les rebords (54) sont fixés aux bords latéraux des plateaux (22, 24) par soudage.

8. Dispositif selon la revendication 7, caractérisé en ce que les zones marginales (57) des bords latéraux des plateaux (22, 24) comportent des bossages (56) facilitant le soudage par ultrasons.

9. Dispositif selon l'une quelconque des revendications précédentes, caractérisé en ce que au moins une plaque latérale (28, 30) comporte des moyens d'entrée (32, 36) et/ou de sortie (34, 38) d'au moins un fluide.

10. Dispositif selon la revendication 9, caractérisé en ce que chaque moyen d'entrée (32, 36) et/ou de sortie (34, 38) du fluide est entouré sur la face intérieure de la plaque latérale (28, 30), par au moins un logement (52).

11. Dispositif selon la revendication 10, caractérisé en ce que dans chaque logement (52) est placé un garnissage d'étanchéité.

12. Dispositif selon la revendication 10, caractérisé en ce que, dans chaque logement (52), est placé un joint (51).

13. Dispositif selon la revendication 12, caractérisé en ce que le ou lesdits joints (51) sont en matériau élastique et sont maintenus pressés contre les faces latérales (27, 29) de l'empilement (26) au moyen des plaques latérales (28, 30).

14. Dispositif selon l'une quelconque des revendications 10, 12 ou 13, caractérisé en ce que chaque moyen d'entrée (32, 36) et/ou de sortie (34, 38) est entouré d'un logement (52) dans lequel est placé un joint (51) qui comporte une rainure (53) ouverte vers la face latérale (27, 29) de l'empilement (26).

15. Dispositif selon l'une quelconque des revendications 10, 12 ou 13, caractérisé en ce que chaque moyen d'entrée (32, 36) et/ou de sortie (34, 38) est entouré de deux logements (52), et que dans chaque logement est placé un joint (51), lesdits joints délimitant entre eux une rainure.

16. Dispositif selon l'une des revendications 14 ou 15, caractérisé en ce que dans la rainure est placé un garnissage (55) d'étanchéité.

17. Appareil caractérisé en ce que l'empilement d'éléments dudit appareil est maintenu sous l'action d'un effort de compression par un dispositif selon l'une quelconque des revendications 1 à 16.

18. Appareil selon la revendication 17, caractérisé en ce que l'empilement (26) dudit appareil comporte sur ses faces latérales des moyens d'entrée et/ou de sortie d'au moins un fluide.

19. Appareil selon la revendication 18, caractérisé en ce que les moyens d'entrée et/ou de sortie d'au moins un fluide, situés sur les faces latérales de l'empilement (26) sont entourés par le ou les joints (51) du dispositif selon la revendication 12, lesdits joints (51) étant maintenus pressés contre les faces latérales (27, 29) de l'empilement (26) au moyen des plaques latérales (28, 30).

20. Appareil selon l'une quelconque des revendications 17 à 19, caractérisé en ce que ledit empilement (26) est constitué de feuilles de membranes semi-perméables et de plaques-supports.

21. Procédé de montage d'un appareil à membrane selon la revendication 17, caractérisé en ce qu'il comporte les opérations ci-après :
— on confectionne un empilement (26) d'éléments,
— on place ledit empilement (26) entre deux plateaux (22, 24), les faces de l'empilement parallèles au plan des éléments étant au contact des faces intérieures desdits plateaux,
— on place l'ensemble ainsi obtenu entre les platines d'une presse,
— on applique sur l'ensemble ainsi obtenu l'effort de compression déterminé,
— on relie chaque plaque latérale (28, 30) aux deux plateaux (22, 24) en plaçant les plaques latérales devant les faces latérales (27, 29) de l'empilement et en engageant les tenons (44) dans les évidements (40) correspondants,
— on relâche l'action de la presse,
— on soude par ultrasons les rebords (54) des plaques latérales (28, 30) aux bords latéraux des plateaux (22, 24).

22. Procédé selon la revendication 21, caractérisé en ce qu'il comporte en outre l'injection d'un produit d'étanchéité approprié dans les logements (52) des plaques latérales (28, 30) d'un dispositif selon la revendication 11.

23. Procédé selon la revendication 21, caractérisé en ce qu'on place des joints (51) dans les logements (52) des plaques latérales (28, 30) avant de les relier aux plateaux (22, 24), et en ce qu'on injecte un garnissage d'étanchéité dans les rainures prévues dans les joints ou délimitées entre les deux joints, après avoir relâché l'action de la presse.

**Claims**

1. Device forming a casing for a stack of elements, which is intended for supporting the said stack under the action of a compressive force, the said device (20) comprising two trays (22, 24), between which the said stack (26) is arranged, the inner faces of the said trays (22, 24) being in contact with the faces of the stack which are substantially parallel to the plane of the elements, and at least two side plates (28, 30) placed in front of at least two side faces (27, 29) opposite the stack, each side plate (28, 30) being connected to each tray (22, 24) by means of a plurality of tenons (44) and mortises (40) interacting by means of their bearing surfaces (42, 46), characterised in that the said bearing surfaces (42, 46) are perpendicular to the plane of the side faces (27, 29) of the stack (26), and in that the side plates (28, 30) possess rims (54) covering the marginal regions (57) of the lateral edges of the trays (22, 24), to which the said rims (54) are fastened.

2. Device according to Claim 1, characterised in that the mortises (40) are arranged along the lateral edges of the trays (22, 24), and in that the tenons (44) are arranged along the corresponding edges of the side plates (28, 30).

3. Device according to Claim 1, characterised in that the tenons (44) are arranged along the lateral edges of the trays (22, 24), and in that the mortises (40) are arranged along the corresponding edges of the side plates (28, 30).

4. Device according to any one of the preceding claims, characterised in that the bearing surfaces (42) of the mortises (40) are concave cylindrical surfaces.

5. Device according to any one of the preceding claims, characterised in that the bearing surfaces (46) of the tenons (44) are convex cylindrical surfaces which are such that the bearing surfaces of the tenons bear against the bearing surfaces of the mortises.

6. Device according to any one of the preceding claims, characterised in that the bearing surfaces (46, 42) of the tenons (44) and of the mortises (40) are cylindrical surfaces, the directrices of which are circular arcs, the cords supporting the said circular arcs and the generatrices of the said cylindrical surfaces being parallel to the plane of the elements, the radius of the directrices of the tenons (44) being smaller than the radius of the directrices of the mortises (40).

7. Device according to Claim 1, characterised in that the rims (54) are fastened to the lateral edges of the trays (22, 24) by means of welding.

8. Device according to Claim 7, characterised in that the marginal regions (57) of the lateral edges of the trays (22, 24) possess bosses (56) making it easier to carry out ultrasonic welding.

9. Device according to any one of the preceding claims, characterised in that at least one side plate (28, 30) incorporates means of inflow (32, 36) and/or outflow (34, 38) of at least one fluid.

10. Device according to Claim 9, characterised in that each means of inflow (32, 36) and/or outflow (34, 38) of the fluid is surrounded on the inner face of the side plate (28, 30), by at least one receptacle (52).

11. Device according to Claim 10, characterised in that packing is arranged in each receptacle (52).

12. Device according to Claim 10, characterised in that a seal (51) is arranged in each receptacle (52).

13. Device according to Claim 12, characterised in that the said seal or seals (51) are made of elastic material and are held pressed against the side faces (27, 29) of the stack (26) by means of the side plates (28, 30).

14. Device according to any one of Claims 10, 12 or 13, characterised in that each means of inflow (32, 36) and/or outflow (34, 38) is surrounded by a receptacle (52), in which is arranged a seal (51) possessing a groove (53) open towards the side face (27, 29) of the stack (26).

15. Device according to any one of Claims 10, 12 or 13, characterised in that each means of inflow (32, 36) and/or outflow (34, 38) is surrounded by two receptacles (52), and in that a seal (51) is arranged in each receptacle, the said seal delimiting a groove between them.

16. Device according to one of Claims 14 or 15, characterised in that a packing (55) is arranged in the groove.

17. Apparatus characterised in that the stack of elements of the said apparatus is maintained under the action of a compressive force by a device according to any one of Claims 1 to 16.

18. Apparatus according to Claim 17, characterised in that the stack (26) of the said apparatus incorporates on its side faces means of inflow and/or outflow of at least one fluid.

19. Apparatus according to Claim 18, characterised in that the means of inflow and/or outflow of at least one fluid, which are located on the side faces of the stack (26), are surrounded by the seal or seals (51) of the device according to Claim 12, the said seals (51) being held pressed against the side faces (27, 29) of the stack (26) by means of the side plates (28, 30).

20. Apparatus according to any one of Claims 17 to 19 characterised in that the said stack (26) consists of sheets of semipermeable membranes and support plates.

21. Method of assembling a membrane apparatus according to Claim 17, characterised in that it involves the following operations :

— a stack (26) of elements is made,

— the said stack (26) is placed between two trays (22, 24), the faces of the stack which are parallel to the plane of the elements being in contact with the inner faces of the said trays,

— the assembly thus obtained is placed between the platens of a press,

— the specified compressive force is exerted on the assembly thus obtained,

— each side plate (28, 30) is connected to the two trays (22, 24) by placing the side plates in front of the side faces (27, 29) of the stack and by engaging the tenons (44) in the corresponding mortises (40),

— the action of the press is released,

— the rims (54) of the side plates (28, 30) are welded to the lateral edges of the trays (22, 24) by means of ultrasonic welding.

22. Method according to Claim 21, characterised in that it also involves injecting a suitable sealing product into the receptacles (52) in the side plates (28, 30) of a device according to Claim 11.

23. Method according to Claim 21, characterised in that seals (51) are placed in the receptacles (52) of the side plates (28, 30) before they are connected to the trays (22, 24), and in that a packing is injected into the grooves provided in the seals or bounded between the two seals, after the action of the press has been released.

**Patentansprüche**

1. Vorrichtung zur Bildung einer Hülle für einen Stapel von Elementen zum Halten des Stapels unter der Wirkung einer Kompressionsbelastung, wobei die Vorrichtung (20) aufweist: zwei Böden (22, 24), zwischen denen der Stapel angeordnet ist, wobei die Innenflächen der Böden (22, 24) in Berührung mit zur Ebene der Elemente im wesentlichen parallelen Flächen des Stapels stehen, und wenigstens zwei seitliche Platten (28, 30), die vor wenigstens zwei gegenüberliegenden seitlichen Flächen (27, 29) des Stapels angeordnet sind, wobei jede seitliche Platte (28, 30) mit jedem Boden (22, 24) durch mehrere mit ihren Anlageflächen (42, 46) zusammenarbeitende Vorsprünge (44) und Ausnehmungen (40) verbunden ist, dadurch gekennzeichnet, daß die Innenflächen (42, 46) zur Ebene der seitlichen Flächen (27, 29) des Stapels senkrecht sind, und daß die seitlichen Platten (28, 30) Ränder aufweisen, die die Randzonen (57) der seitlichen Ränder der Böden (22, 24) bedecken, an denen die Ränder (54) befestigt sind.

2. Vorrichtung nach Anspruch 1, dadurch gekennzeichnet, daß sich die Ausnehmungen (40) längs der seitlichen Ränder der Böden (22, 24) befinden, und daß die Vorsprünge (44) sich längs der entsprechenden Ränder der seitlichen Platten (28, 30) befinden.

3. Vorrichtung nach Anspruch 1, dadurch gekennzeichnet, daß die Vorsprünge (44) sich längs der seitlichen Ränder der Böden (22, 24) befinden, und daß sich die Ausnehmungen (40) längs der entsprechenden Ränder der seitlichen Platten (28, 30) befinden.

4. Vorrichtung nach einem der vorhergehenden Ansprüche, dadurch gekennzeichnet, daß die Anlageflächen (42) der Ausnehmungen (40) zylindrische konkave Flächen sind.

5. Vorrichtung nach einem der vorhergehenden Ansprüche, dadurch gekennzeichnet, daß die Anlageflächen (46) der Vorsprünge (44) zylindrische konvexe Flächen derart sind, daß die Anlageflächen der Vorsprünge an den Anlageflächen der Ausnehmungen anliegen.

6. Vorrichtung nach einem der vorhergehenden Ansprüche, dadurch gekennzeichnet, daß die Anlageflächen (46, 42) der Vorsprünge (44) und der Ausnehmungen (40) zylindrische Flächen sind, deren Leitlinien Kreisbögen sind, wobei die diese Kreisbögen haltenden Sehnen und die Mantellinien der zylindrischen Flächen parallel zur Ebene der Elemente sind, wobei der Radius der Leitlinien der Vorsprünge (44) kleiner als der Radius der Mantellinien der Ausnehmungen (40) ist.

7. Vorrichtung nach Anspruch 1, dadurch gekennzeichnet, daß die Ränder (54) durch Schweißen mit den seitlichen Rändern der Böden (22, 24) verbunden sind.

8. Vorrichtung nach Anspruch 7, dadurch gekennzeichnet, daß die Randzonen (57) der seitlichen Ränder der Böden (22, 24) Ansätze (56) aufweisen, die das Schweißen durch Ultraschall erleichtern.

9. Vorrichtung nach einem der vorhergehenden Ansprüche, dadurch gekennzeichnet, daß wenigstens eine seitliche Platte (28, 30) Einlaßmittel (32, 36) und/oder Auslaßmittel (34, 38) für wenigstens ein Fluid aufweist.

10. Vorrichtung nach Anspruch 9, dadurch gekennzeichnet, daß jedes Einlaßmittel (32, 36) und/oder Auslaßmittel (34, 38) für das Fluid auf der Innenfläche der seitlichen Platte (28, 30) von wenigstens einem Sitz (52) umgeben ist.

11. Vorrichtung nach Anspruch 10, dadurch gekennzeichnet, daß in jeden Sitz (52) ein Dichtungspackung eingesetzt ist.

12. Vorrichtung nach Anspruch 10, dadurch gekennzeichnet, daß in jeden Sitz (52) eine Dichtung (51) eingesetzt ist.

13. Vorrichtung nach Anspruch 12, dadurch gekennzeichnet, daß die Dichtungen (51) aus elastischem Material bestehen und durch die seitlichen Platten (28, 30) gegen die seitlichen Flächen (27, 29) des Stapels (26) gedrückt gehalten werden.

14. Vorrichtung nach einem der Ansprüche 10, 12 oder 13, dadurch gekennzeichnet, daß jedes Einlaßmittel (32, 36) und/oder Auslaßmittel (34, 38) von einem Sitz (52) umgeben ist, in den eine Dichtung (51) eingesetzt ist, die eine zur seitlichen Fläche (27, 29) des Stapels (26) offene Nut (53) aufweist.

15. Vorrichtung nach einem der Ansprüche 10, 12 oder 13, dadurch gekennzeichnet, daß jedes Einlaßmittel (32, 36) und/oder Auslaßmittel (34, 38) von zwei Sitzen (52) umgeben ist, und daß in jeden Sitz eine Dichtung (51) eingesetzt ist, wobei die Dichtungen zwischen sich eine Nut bilden.

16. Vorrichtung nach einem der Ansprüche 14 oder 15, dadurch gekennzeichnet, daß in die Nut eine Dichtungspackung (55) eingesetzt ist.

17. Apparat, dadurch gekennzeichnet, daß der Stapel von Elementen des Apparats durch eine Vorrichtung nach einem der Ansprüche 1 bis 16 unter einer Kompressionskraft gehalten wird.

18. Apparat nach Anspruch 17, dadurch gekennzeichnet, daß der Stapel (26) des Apparats auf seinen seitlichen Flächen Einlaß- und/oder Auslaßmittel für wenigstens ein Fluid aufweist.

19. Apparat nach Anspruch 18, dadurch gekennzeichnet, daß die auf den seitlichen Flächen des Stapels (26) befindlichen Einlaß- und/oder Auslaßmittel für wenigstens ein Fluid von der oder den Dichtungen (51) der Vorrichtung nach Anspruch 12 umgeben sind, wobei die Dichtungen durch die seitlichen Platten (28, 30) gegen die seitlichen Flächen (27, 29) des Stapels (26) gedrückt gehalten werden.

20. Apparat nach einem der Ansprüche 17 bis 19, dadurch gekennzeichnet, daß der Stapel (26) aus halbdurchlässigen Membranblättern und aus Plattenträgern besteht.

21. Verfahren zur Montage eines Membranapparats nach Anspruch 17, dadurch gekennzeichnet, daß es die folgenden Vorgänge umfaßt:
— man stellt einen Stapel (26) von Elementen her,
— man plaziert den Stapel (26) zwischen zwei Böden (22, 24), wobei die zur Ebene der Elemente parallelen Flächen des Stapels mit den Innenflächen der Böden in Berührung stehen,

— man plaziert die auf diese Weise hergestellte Anordnung zwischen den Platinen einer Presse,

— man übt auf die auf diese Weise hergestellte Anordnung eine gegebene Druckkraft aus,

— man verbindet jede seitliche Platte (28, 30) mit zwei Böden (22, 24) durch Plazieren der seitlichen Platten vor den seitlichen Flächen (27, 29) des Stapels und durch Einsetzen der Vorsprünge (44) in die ensprechenden Ausnehmungen (40),

— man entspannt die Wirkung der Presse,

— man verschweißt durch Ultraschall die Ränder (54) der seitlichen Platten (28, 30) mit den seitlichen Rändern der Böden (22, 24).

22. Verfahren nach Anspruch 21, dadurch gekennzeichnet, daß es außerdem das Einspritzen eines geeignetne Dichtungsmaterials in die Sitze (52) der seitlichen Platten (28, 30) einer Vorrichtung nach Anspruch 11 umfaßt.

23. Verfahren nach Anspruch 21, dadurch gekennzeichnet, daß man Dichtungen (51) in die Sitze (52) der seitlichen Platten (28, 30) vor deren Verbinden mit den Böden (22, 24) einsetzt, und daß man vor dem Entspannen der Wirkung der Presse in die in den Dichtungen vorgesehenen oder zwischen zwei Dichtungen gebildeten Nuten eine Dichtungspackung einspritzt.

FIG. 2

FIG. 1

0 023 188

FIG. 3

FIG. 4

FIG. 5

52   35      46    44        28-30           54          Ⅲ         Ⅳ

Ⅲ                                                                    Ⅳ

FIG. 7

40              42      22-24

FIG. 6

56      40                            Ⅲ          Ⅳ

22-24

Ⅲ          Ⅳ

0 023 188

0 023 188

FIG. 8

FIG. 9

FIG. 10

FIG. 11

4